(19)

Europäisches
Patentamt
European
Patent Office
Office européen
des brevets

(11) **EP 2 200 246 A1**

(12) **EUROPEAN PATENT APPLICATION**

(43) Date of publication:
**23.06.2010 Bulletin 2010/25**

(51) Int Cl.:
***H04L 27/26*** (2006.01)

(21) Application number: **08305996.4**

(22) Date of filing: **22.12.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Thomson Licensing
92443 Issy-les-Moulineaux Cedex (FR)**

(72) Inventors:
• **Liu, Peng
100085, BEIJING (CN)**

• **Du, Yongjiu
100085, BEIJING (CN)**
• **Zou, Li
100088, BEIJING (CN)**

(74) Representative: **Ruellan-Lemonnier, Brigitte
Thomson
1, rue Jeanne d'Arc
92443 Issy-les-Moulineaux Cedex (FR)**

(54) **Method and apparatus for estimating phase noise in an OFDM transmission system**

(57)    A method for estimating phase noise in an OFDM transmission system is provided. The method comprises the steps of receiving (S301) an OFDM symbol and transforming (S302) the OFDM symbol from time domain to frequency domain; extracting (S303) at least one service information symbols from the OFDM symbol; estimating (S304) reference service information symbols of the extracted service information signals; and determining (S305) a phase noise representative value as a function of correlation between the extracted information symbols and the estimated reference service information signals.

Fig.3

**Description**

FIELD OF THE INVENTION

The present invention relates generally to Orthogonal Frequency Division Multiplexing (OFDM) transmission, and more particularly, to a method and apparatus for estimating phase noise in OFDM transmission systems.

BACKGROUND OF THE INVENTION

In a communication system, modulators and demodulators usually work at baseband or at an intermediate frequency (IF). Since signals have to be transmitted at an allocated radio frequency (RF), modulated signals should be up-converted to a RF channel at a transmitter. Correspondingly, RF signals should be down-converted to IF or baseband at a receiver. Thus, local oscillators are used in the transmitter and the receiver, which will introduce phase noise (PHN). Usually the receiver is manufactured with lower cost and realized by a voltage control oscillator (VCO). So PHN is concerned more for the receiver.
The PHN may be a big problem for an OFDM transmission system. Since an OFDM signal consists of many low rate sub-carriers that are orthogonal to each other, a low symbol rate will make the synchronization more difficult when fast phase disturbances occur, and the PHN will also degrade orthogonality of the sub-carriers.

SUMMARY OF THE INVENTION

According to one aspect of the invention, a method for estimating phase noise in an OFDM transmission system is provided. The method comprises the step, at the level of a receiver, of determining a phase noise value as a function of at least one service information carrier of an OFDM symbol.
In one embodiment of the present invention, a method for estimating phase noise in an OFDM transmission system is provided. The method comprises the steps of receiving an OFDM symbol and transforming the OFDM symbol from time domain to frequency domain; extracting at least one service information symbols from the OFDM symbol; estimating reference service information symbols of the extracted service information symbols; and determining a phase noise representative value as a function of correlation between the extracted service information symbols and the estimated reference service information symbols.
According to another aspect of the invention, an OFDM receiver is provided. The OFDM receiver comprises: a transforming unit, for transforming an OFDM symbol received by the receiver from time domain to frequency domain; and a phase noise estimating and compensating unit, for estimating the phase noise value as a function of correlation between the service information symbols of the OFDM symbol and the reference service information symbols and compensating the phase noise with the estimation result.
In one embodiment of the present invention, the phase noise estimating and compensating unit comprises: a FIFO for receiving the transformed OFDM symbol from the transforming unit and delaying the transformed OFDM symbol; an extracting unit for receiving the transformed OFDM symbol from the transforming unit and extracting a predetermined number of service information symbols from the transformed OFDM symbol; a decoder for receiving the service information symbols from the extracting unit and performing a decoding to the service information symbols to obtain respective reference service information symbols; a correlator for performing a correlation between each of the service information symbols from the extracting unit and its reference service information symbols from the decoder to obtain phase difference therebetween; an angle calculator for performing an angle calculation to the phase difference from the correlator to obtain the phase noise value; and a multiplier for complex multiplying the transformed OFDM symbol from the FIFO with the phase noise value from the angle calculator and outputting the compensated OFDM symbol.

BRIEF DESCRIPTION OF DRAWINGS

These and other aspects, features and advantages of the present invention will become apparent from the following description in connection with the accompanying drawings in which:

Figure 1 is an exemplary diagram showing the structure of an OFDM frame which includes TPS signals in the frequency domain in the prior art;
Figure 2 is an exemplary diagram showing the locations of the TPS signals in a DTMB frame in the prior art;
Figure 3 is a flow chart showing a work flow of a PHN estimation method according to one embodiment of the present invention;
Figure 4 is a flow chart showing the hard decision for the TPS signals;
Figure 5 is a block diagram showing a structure of a DTMB demodulator according to one embodiment of the present invention;

Figure 6 is a block diagram showing the structure of a PHN estimation and compensation unit of the embodiment;

Figure 7 is a table showing the conditions of simulations of experiments for assessing performance DTMB demodulator according to the embodiment of the invention; and

Figure 8 is a table showing the testing result of using different numbers of TPS signals for the PHN estimation.

DETAILED DESCRIPTION OF PREFERRED EMBODIMENTS

In the following description, various aspects of an embodiment of the present invention will be described. For purposes of explanation, specific configurations and details are set forth in order to provide a thorough understanding. However, it will also be apparent to one skilled in the art that the present invention may be practiced without the specific details present herein.

The Digital Terrestrial Media Broadcasting (DTMB) standard is a Chinese HDTV standard, which is based on OFDM. Full information regarding DTMB is given in the document of National standard of the People's Republic of China "GB 20600-2006" (Framing structure, channel coding and modulation for digital television terrestrial broadcasting system). Specifically, the DTMB system is a time domain synchronization OFDM system.

When PHN has been introduced into signals received by a DTMB demodulator, these signals will suffer two defects: common phase error (a rotation of the signal constellation) and inter-carrier interference (similar to additive Gaussian noise). Both of the two defects will interfere with the demodulation of the signals. Therefore, PHN estimation and removal are very important for the DTMB demodulator. It is necessary to provide a PHN estimation solution that is fully compatible with the DTMB standard and can estimate accurately the PHN in the DTMB demodulator with very low complexity, and then compensate the same.

Unlike other known OFDM systems, the guard interval of the DTMB signal is composed of a serial pseudo-random code which makes the DTMB system dependent on the data-aided synchronization and channel estimation algorithm. But the PHN cannot be estimated using this time domain information.

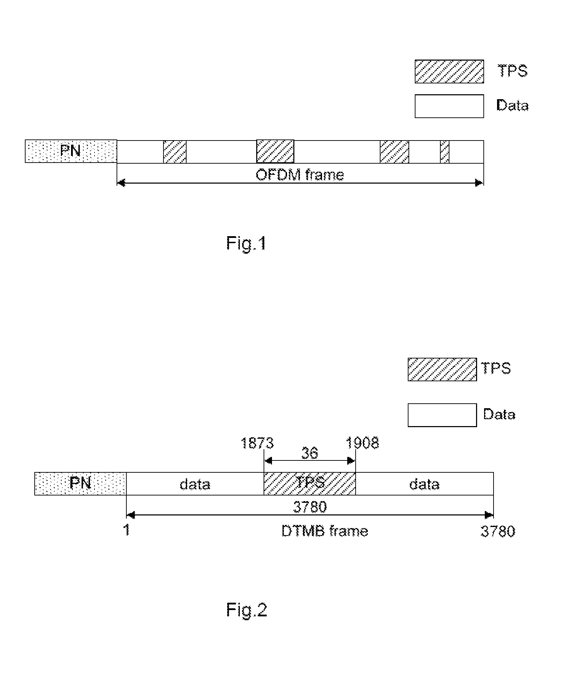

As a multi-carrier technology, an OFDM frame has a plurality of orthogonal sub-carriers some of which can be used to carry service information. The service information can be the transmission parameter signalling (TPS) signals which help the demodulation and decoding at the receiver end. Figure 1 shows the structure of an OFDM frame which includes TPS signals in the frequency domain.

Similarly, TPS signals are inserted in the DTMB frame, in the frequency domain, to carry the system information which provides necessary demodulation and decoding information for every signal, including symbol constellation mapping mode, code rate of LDPC coding, interleaving mode information, frame body mode, etc. In the DTMB specification, 64 system information modes are preset and the spread spectrum technology is used for the transmission. Thus 36 system information symbols are combined into frame body data to carry this system information. Figure 2 shows the locations of the TPS signals in a DTMB frame. As shown in Figure 2, among the 3780 symbols in one DTMB frame, the symbols from 1873 to 1908 are for the TPS signals.

The TPS carriers are modulated by BPSK (Binary Phase Shift Keying) mode at the transmitter. The PHN on the data can be estimated using the TPS signals. In the DTMB demodulator, the synchronization and the channel estimation work in the time domain. The PHN estimation and compensation based on the TPS signals is performed in the frequency domain.

According to one embodiment of the present invention, a method for estimating PHN in DTMB receiver is provided.

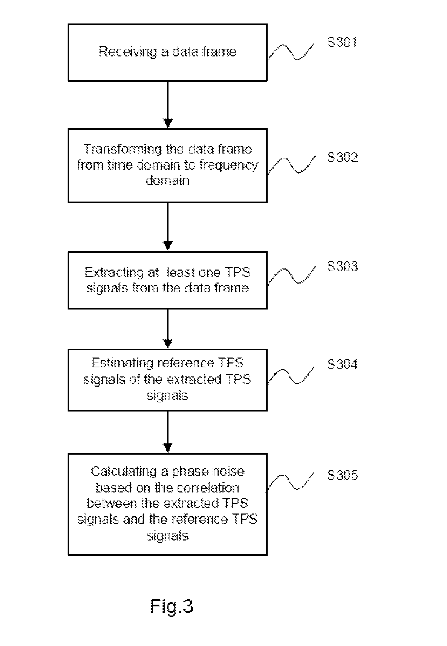

Figure 3 shows the work flow of a PHN estimation method according to one embodiment of the present invention.

Firstly, at step S301, a data frame is received by a DTMB receiver. And then at step S302, the received data frame is transformed from the time domain to the frequency domain. In the DTMB receiver, the synchronization and the channel estimation work in time domain. However, the PHN estimation method based on the TPS signals of a received data frame, according to the embodiment, is in the frequency domain. So, the data frame needs to be transformed from the time domain to the frequency domain.

The method then proceeds to step S303, in which at least one of the TPS signals is extracted from the received data frame. As described above, the locations of the TPS signals in a data frame are described in the DTMB specification. A preset number of TPS signals can be extracted according to the DTMB specification.

Next, at step S304, reference TPS signals of the extracted TPS signals are obtained. A reference TPS signal is a cleaned signal, i.e. without influence by interference or noise. In view of the BPSK modulation mode of TPS signal, which is more robust to channel degradation and noise than the data modulation mode, 4QAM, 16QAM and 64QAM, the reference TPS signals of the current frame can be estimated by a hard decision rule based on the extracted TPS signals. The hard decision is simple to implement.

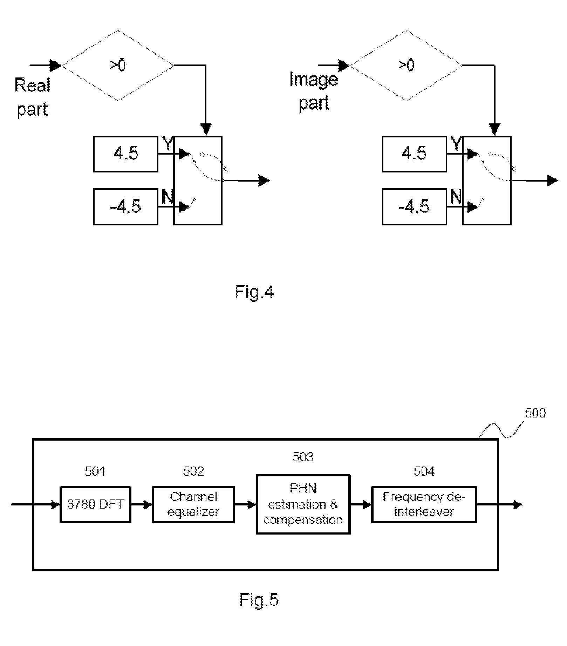

Figure 4 illustrates the hard decision rule for the TPS signals. As shown in Figure 4, in a condition that zero is selected as a decision threshold, the real part will be decided by the hard decision rule to be 4.5 when it is larger than zero, and -4.5 when it is smaller than zero. The processing of the image part of a complex number of a signal is the same as that of the real part.

Referring back to Figure 3, finally, at step S305, the PHN is calculated based on the correlation between the extracted TPS signals and the reference TPS signals. Since the PHN appears on the phase angle of the data, the change of the phase angle of the data needs to be obtained for estimating the PHN. As one example for this step S305, a cross-correlation between the extracted TPS signals and their reference TPS signals is performed to obtain their phase difference which corresponds to the PHN of the current frame. As known to a person in the art, the cross-correlation function comprises the steps of calculating the complex conjugate of the reference TPS signals; calculating the complex multiplication of the extracted TPS signals and the complex conjugate of respective reference TPS signals; and calculating the sum of the multiplication results, which is the cross-correlation result. Then the change of phase angle is calculated by an arc-tangent function to obtain the PHN.

Figure 5 is a block diagram of a DTMB demodulator according to one embodiment of the present invention.

As shown in Figure 5, according to the specific embodiment, the DTMB demodulator 500 comprises, connected in series, a 3780 DFT 501, a channel equalizer 502, a PHN estimation and compensation unit 503 and a frequency de-interleaver 504.

As described above, in the DTMB demodulator 500, the synchronization and the channel estimation work in the time domain while the PHN estimation and compensation is performed in the frequency domain. So the 3780 DFT 501, which is a discrete Fourier transformer, will transform a data frame received by the DTMB demodulator 500 from time domain to frequency domain.

The transformed data frame is fed to the channel equalizer 502 that compensates the channel effects on the data frame.

The PHN estimation and compensation unit 503 follows the channel equalizer to eliminate the PHN.

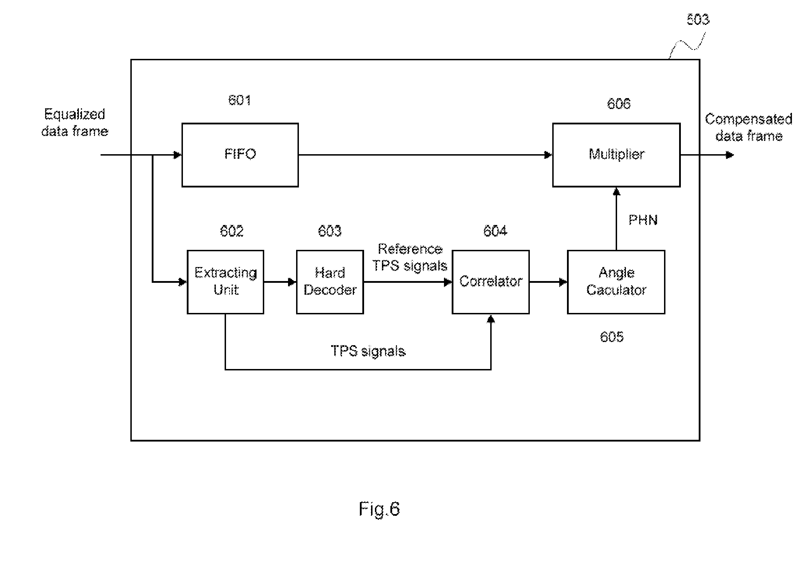

Figure 6 shows the structure of the PHN estimation and compensation unit 503 in accordance with one embodiment of the present invention.

Now referring to Figure 6, according to this specific embodiment, the PHN estimation and compensation unit 503 comprises a FIFO 601 which will delay the equalized data frame from the channel equalizer 502 for later compensation when the PHN estimation result is obtained later.

At the same time, the equalized data frame is also fed to an extracting unit 602 which will extract a predetermined number of TPS signals from the data frame. Because the locations of TPS signals in a DTMB data frame are defined in the DTMB specification, the extracting unit 602 can extract some or all TPS signals accordingly for PHN estimation.

The extracted TPS signals are fed into a hard decoder 603 which performs a hard decision to the extracted TPS signals to obtain respective reference TPS signals.

A correlator 604 follows the hard decoder 603 to perform a correlation, a cross correlation in the embodiment, between each of the extracted TPS signals and its reference TPS signals to obtain the phase difference of the data frame.

The phase difference is input to an angle calculator 605 to calculate the result of PHN which is then used to compensate for the data frame delayed in the FIFO 601. In this embodiment, the angle calculator performs an arc-tangent function to the phase differences.

As shown in Figure 6, the result of the PHN estimation is fed to a multiplier 606 to complex multiply the data frame in the FIFO 601 with the PHN result, by which the data frame is compensated.

Referring again to Figure 5 now, the compensated data frame from the compensator may be fed to the frequency de-interleaver 504 which has a de-interleaver function corresponding with the frequency interleaving in the transmitter.

In the following, the principle of the PHN estimation and compensation solution of the DTMB demodulator according to the above embodiment of the present invention will be described in more detail.

The PHN of the data introduced mainly by the VCO of the down-converter is reflected from the phase difference of the data frame in the frequency domain.

If the PHN is φ, the DTMB signals received in the demodulator can be expressed as:

$$r(n) = e^{j\varphi}x(n) * h(n) + n(n) \qquad (1)$$

where $r(n)$ is the received DTMB signal, $x(n)$ is the transmitted DTMB signal, $h(n)$ is the channel impulse response, $n(n)$ is the additional white Gaussian noise (AWGN).

After the DFT, R(k) can be expressed by the following equation (2) in frequency domain:

$$R(k) = e^{j\varphi}X(k) \cdot H(k) + N(k) \qquad (2)$$

After the channel equalizer, R(k) can be expressed by the following equation (3):

$$R(k) = e^{j\varphi}X(k) \cdot H(k) \cdot H^*(k)/|H(K)|^2 + N(k) \cdot H^*(k)/|H(K)|^2$$
$$= e^{j\varphi}X(k) + N'(k) \tag{3}$$

If the clean TPS signal is $P(k)$, the TPS signal after the channel equalizer in the demodulator can be expressed as:

$$P'(k) = e^{j\varphi}P(k) + N'(k) \tag{4}$$

When PHN is estimated, the complex sum of the cross-correlation can be obtained firstly by the following equation (5):

$$Corr\_sum = \sum_{k=1}^{L} P'(k) \cdot P^*(k) = \sum_{k=1}^{L} (e^{j\varphi}P(k) + N'(k)) \cdot P^*(k)$$
$$= \sum_{k=1}^{L} e^{j\varphi}P(k) \cdot P^*(k) = e^{j\varphi} \sum_{k=1}^{L} |P(k)|^2 \tag{5}$$

where $P^*(k)$ is the conjugate complex of $P(k)$, $L$ is the number of TPS signals in one DTMB data frame. are(*) is the function for angle calculation. Then the angle of the PHN can be expressed as:

$$\hat{\varphi} = \arg(Corr\_sum) \tag{6}$$

where $\hat{\varphi}$ is the estimated PHN.

After PHN compensation, R(k) can be expressed by the following equation (7):

$$R(k) = e^{j\varphi}X(k) * e^{-j\hat{\varphi}} + N'(k) * e^{-j\hat{\varphi}} = X(k) + N''(k) \tag{7}$$

Thus, the PHN of the data frame is estimated and then compensated according to the invention.

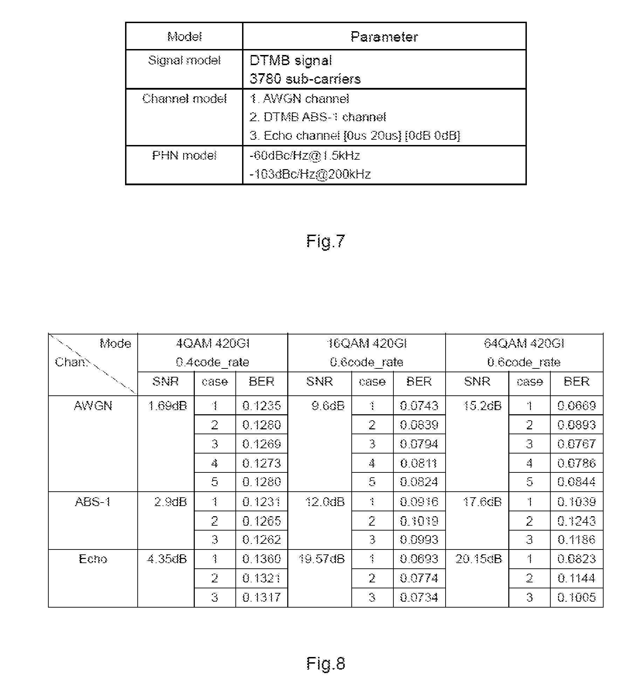

The present invention can use one to all TPS signals in one frame in the frequency domain for the estimation and compensation of PHN. A variety of simulation experiments were done to assess the performance of the invention. Figure 7 is a table showing the conditions of simulation. As shown in Figure 7, the experiments are performed using typical DTMB signals with the channel mode and PHN model indicated in the table. For the PHN model in the table, for example, -60dBc/Hz@1.5kHz means that the PHN is 60dBc/Hz at the distance of 1.5kHz from the central frequency.

Figure 8 shows a table of testing result of using different numbers of TPS signals for the PHN estimation. In the table of Figure 8, the SNR is the threshold for the modes and the BER is the hard BER results, that is, the bit error rates after demapping. Case 1 in the table shows a result without PHN and compensation, case 2 shows the one with PHN but without compensation, case 3 shows the one using all TPS signals in one OFDM frame for PHN estimation and compensation, case 4 shows just using half of the TPS signals in one OFDM frame for PHN estimation and compensation, and case 5 shows using only one TPS signal in one OFDM frame for PHN estimation and compensation.

The demodulator according to the embodiment of the present invention also does not suffer from the channel effects as it follows the channel equalizer, and then can use the hard decision and cross-correlation structure which are simple to implement.

In addition, the demodulator according to the embodiment may use the angle of the complex sum of the cross-correlation results of a plurality of TPS signals. Therefore, estimation errors at one or some of these TPS signals will not greatly affect the estimation accuracy.

Although embodiments of the invention have been described with respect to a DTMB system, other OFDM communication systems may also use the invention. What has been described is merely illustrative of the principles of the invention. It is to be understood that numerous modifications may be made to the illustrative embodiments and that other arrangements may be devised without departing from the spirit and scope of the present invention as defined by the appended claims.

**Claims**

1. A method for estimating phase noise in an OFDM transmission system, comprising the step, at the level of a receiver, of determining a phase noise value as a function of at least one service information carrier of an OFDM symbol.

2. The method according to claim 1, **characterized in that** the at least one service information carrier is modulated with transmission parameter signalling information.

3. The method according to claim 2, **characterized in that** said transmission parameter signalling information is constant over a plurality of consecutive frames but may vary if transmission parameters are modified.

4. The method according to one of claims 1-3, **characterized in that** said at least one service information carrier is at a fixed predetermined position in the OFDM symbol.

5. The method according to one of claims 1-4, **characterized in that** the OFDM symbol does not comprise an explicit reference signal carrier.

6. Method according to one of the claim 1, further comprising the steps of:

   receiving (S301) an OFDM symbol and transforming (S302) the OFDM symbol from time domain to frequency domain;
   extracting (S303) at least one service information symbols from the OFDM symbol;
   estimating (S304) reference service information symbols of the extracted service information symbols; and
   determining (S305) a phase noise representative value as a function of correlation between the extracted service information symbols and the estimated reference service information symbols.

7. Method according to claim 6, **characterized in that** the estimation is carried out by hard decision.

8. Method according to claim 6, **characterized in that** the determination is carried out by cross-correlation.

9. The method according to any one of claims 6-8, wherein the transformed OFDM symbol is subjected to a channel equalization before extracting at least one service information symbols from the OFDM symbol.

10. An OFDM receiver (500), comprising

    a transforming unit (501), for receiving an OFDM symbol from an OFDM transmitter and transforming the OFDM symbol from time domain to frequency domain; and
    a phase noise estimating and compensating unit (503), for receiving the transformed OFDM symbol from the transforming unit (501) and estimating the phase noise value as a function of correlation between the service information symbols of the OFDM symbol and their respective reference service information symbols and compensating the phase noise with the estimation result.

11. The OFDM receiver (500) according to claim 10, wherein the phase noise estimating and compensating unit (503) comprises

    a FIFO (601) for receiving the transformed OFDM symbol from the transforming unit (501) and delaying the transformed OFDM symbol;
    an extracting unit (602) for receiving the transformed OFDM symbol from the transforming unit (501) and extracting a predetermined number of service information symbols from the transformed OFDM symbol;
    a decoder (603) for receiving the service information symbols from the extracting unit (602) and performing a decoding to the service information symbols to obtain respective reference service information symbols;
a correlator (604) for performing a correlation between the service information symbols from the extracting unit (602) and their reference service information symbols from the decoder (603) to obtain the phase difference of the transformed OFDM symbol;
an angle calculator (605) for performing an angle calculation to the phase difference from the correlator (604) to obtain the phase noise value; and
a multiplier (606) for complex multiplying the transformed OFDM symbol from the FIFO (601) with the phase noise value from the angle calculator (605) and outputting the compensated OFDM symbol.

12. The OFDM receiver (500) according to claim 11, wherein the decoder (603) is a hard decoder.

13. The OFDM receiver (500) according to claim 11, wherein the correlator (604) is a cross-correlator.

14. The OFDM receiver (500) according to claim 10, further comprising a channel equalizer (502) for receiving the transformed OFDM symbol received from transforming unit (501) and compensating the channel effects on the transformed OFDM symbol and then feeding the transformed OFDM symbol to the phase noise estimating and compensating unit (503).

15. The OFDM receiver (500) according to claim 10, further comprising a frequency de-interleaver (504) which has a de-interleaving function corresponding to the frequency interleaving in a OFDM transmitter, for receiving and de-interleaving the compensated OFDM symbol from the phase noise estimating and compensating unit (503).

Fig.1

Fig.2

Receiving a data frame — S301

Transforming the data frame from time domain to frequency domain — S302

Extracting at least one TPS signals from the data frame — S303

Estimating reference TPS signals of the extracted TPS signals — S304

Calculating a phase noise based on the correlation between the extracted TPS signals and the reference TPS signals — S305

Fig.3

Real
part

>0

4.5  Y

-4.5  N

Image
part

>0

4.5  Y

-4.5  N

Fig.4

500

501  502  503  504

3780 DFT | Channel equalizer | PHN estimation & compensation | Frequency de-interleaver

Fig.5

Fig.6

EP 2 200 246 A1

| Model | Parameter |
|---|---|
| Signal model | DTMB signal<br>3780 sub-carriers |
| Channel model | 1. AWGN channel<br>2. DTMB ABS-1 channel<br>3. Echo channel [0us 20us] [0dB 0dB] |
| PHN model | -60dBc/Hz@1.5kHz<br>-103dBc/Hz@200kHz |

Fig.7

| Mode / Chan. | 4QAM 420GI 0.4code_rate | | | 16QAM 420GI 0.6code_rate | | | 64QAM 420GI 0.6code_rate | | |
|---|---|---|---|---|---|---|---|---|---|
| | SNR | case | BER | SNR | case | BER | SNR | case | BER |
| AWGN | 1.69dB | 1 | 0.1235 | 9.6dB | 1 | 0.0743 | 15.2dB | 1 | 0.0669 |
| | | 2 | 0.1280 | | 2 | 0.0839 | | 2 | 0.0893 |
| | | 3 | 0.1269 | | 3 | 0.0794 | | 3 | 0.0767 |
| | | 4 | 0.1273 | | 4 | 0.0811 | | 4 | 0.0786 |
| | | 5 | 0.1280 | | 5 | 0.0824 | | 5 | 0.0844 |
| ABS-1 | 2.9dB | 1 | 0.1231 | 12.0dB | 1 | 0.0916 | 17.6dB | 1 | 0.1039 |
| | | 2 | 0.1265 | | 2 | 0.1019 | | 2 | 0.1243 |
| | | 3 | 0.1262 | | 3 | 0.0993 | | 3 | 0.1186 |
| Echo | 4.35dB | 1 | 0.1360 | 19.57dB | 1 | 0.0693 | 20.15dB | 1 | 0.0823 |
| | | 2 | 0.1321 | | 2 | 0.0774 | | 2 | 0.1144 |
| | | 3 | 0.1317 | | 3 | 0.0734 | | 3 | 0.1005 |

Fig.8

Europäisches
Patentamt

European
Patent Office

Office européen
des brevets

## EUROPEAN SEARCH REPORT

Application Number

EP 08 30 5996

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FANG YANG ET AL: "Phase Noise Correction Based on TPS Symbols for the Chinese DTTB System" IEEE TRANSACTIONS ON BROADCASTING, IEEE SERVICE CENTER, PISCATAWAY, NJ, US LNKD-DOI:10.1109/TBC.2008.2003019, vol. 52, no. 4, 1 December 2008 (2008-12-01), pages 799-805, XP011238005 ISSN: 0018-9316 | 1-5 | INV. H04L27/26 |
| Y | * paragraphs [II.B.], [ IV.C.]; figures 4, 6 * | 6-15 | |
| Y | WO 2008/122144 A1 (THOMSON LICENSING [FR]; LIU PENG [CN]) 16 October 2008 (2008-10-16) | 6-15 | |
| A | * page 2, line 14 - line 23 * * page 5, line 3 - line 24 * * figures 1, 2 * | 1 | |
| A | US 2006/182015 A1 (KIM DONG-KYU [KR]) 17 August 2006 (2006-08-17) * abstract * * paragraphs [0010] - [0013], [0 29] - [0031]; figures 1-4 * | 1-14 | TECHNICAL FIELDS SEARCHED (IPC) H04L |

The present search report has been drawn up for all claims

| Place of search | Date of completion of the search | Examiner |
|---|---|---|
| Berlin | 13 April 2010 | Masche, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 08 30 5996

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2010

| Patent document cited in search report | | Publication date | Patent family member(s) | | Publication date |
|---|---|---|---|---|---|
| WO 2008122144 | A1 | 16-10-2008 | CN | 101636997 A | 27-01-2010 |
| | | | EP | 2130345 A1 | 09-12-2009 |
| US 2006182015 | A1 | 17-08-2006 | DE 102006004119 A1 | | 07-09-2006 |
| | | | JP | 2006211667 A | 10-08-2006 |
| | | | KR | 20060085758 A | 28-07-2006 |

For more details about this annex : see Official Journal of the European Patent Office, No. 12/82

EPO FORM P0459

**REFERENCES CITED IN THE DESCRIPTION**

**Patent documents cited in the description**

- GB 206002006 A